# EUROPEAN PATENT APPLICATION

(11) **EP 4 694 305 A1**
(43) Date of publication of application: **11.02.2026**
(21) Application number: 24784066.3
(22) Date of filing: 20.03.2024
(51) Int. Cl.: H04W 28/02, H04W 72/12

(54) **INFORMATION PROCESSING METHOD, INFORMATION TRANSMISSION METHOD, APPARATUS, TERMINAL AND NETWORK DEVICE**

(30) Priority: 07.04.2023 CN 202310367395
(71) Applicant: Datang Mobile Communications Equipment Co., Ltd., Beijing 100085 (CN)
(72) Inventor: ZHAO, Yali, Beijing 100085 (CN); CHEN, Li, Beijing 100085 (CN); BERTRAND, Pierre, Beijing 100085 (CN)
(74) Representative: Maiwald GmbH
(86) International application number: PCT/CN2024/082608
(87) International publication number: WO 2024/207981

(57) **Abstract**

This disclosure provides an information processing method, information transmission method, apparatus, terminal and network device, and pertains to the field of communication technology. The information processing method is performed by a terminal and includes: receiving first configuration information sent by a network device, wherein the first configuration information includes an association between a first target object and a timing length of a discard timer; and determining, based on the first configuration information, the association between the first target object and the timing length of the discard timer; wherein the first target object includes at least one of the following: a congestion level of the terminal or an attribute of a PDU set.

## Description

### CROSS-REFERENCE TO RELATED APPLICATION

This disclosure claims priority to Chinese patent application No. 202310367395.8, filed with the CNIPA on April 7, 2023, and entitled "information processing method, information transmission method, apparatus, terminal and network device", disclosure of which is incorporated herein by reference in its entirety.

### TECHNICAL FIELD

The present disclosure relates to the field of communication technology, and in particular to an information processing method, an information transmission method, an apparatus, a terminal, and a network device.

### BACKGROUND

5G user plane air interface protocol layers include the service data adaptation protocol (SDAP) layer, the packet data convergence protocol (PDCP) layer, the radio link control (RLC) layer, the media access control (MAC) layer, and the physical layer.

When a quality of service (QoS) flow arrives at the SDAP layer, the SDAP layer maps the QoS flow to a data radio bearer (DRB), and then forms an SDAP protocol data unit (PDU). The SDAP PDU is a PDCP service data unit (SDU). The PDCP layer performs header compression and encryption on the PDCP SDU before delivering it to the RLC layer. The RLC layer then encapsulates the RLC PDU based on scheduling information of the MAC layer and delivers it to the MAC layer. The MAC layer encapsulates the received RLC PDU into a MAC PDU and then delivers it to the physical layer for transmission.

Conventionally, upon receiving an SDU from a higher layer, the PDCP layer starts a PDCP discard timer for the SDU. When the PDCP discard timer expires, the PDCP SDU is discarded. The conventional SDU discarding mechanism only considers the influence of delay and does not consider whether there is congestion. In scenarios where congestion occurs, how to alleviate congestion needs to be considered.

### SUMMARY

Embodiments according to the present disclosure provide an information processing method, an information transmission method, an apparatus, a terminal, and a network device to alleviate congestion.

In order to solve the above technical problems, an embodiment of the present disclosure provides an information processing method performed by a terminal, including:
receiving first configuration information sent by a network device, wherein the first configuration information includes an association between a first target object and a timing length of a discard timer;
determining, according to the first configuration information, the association between the first target object and the timing length of the discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the method further includes:
reporting first information to the network device;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the method further includes:
determining, based on the association and second information, a timing length of a discard timer corresponding to a second target object;
wherein the second target object includes at least one of the following: a packet data convergence protocol (PDCP) service data unit (SDU), or a PDU set;
the second information includes at least one of the following:
   the congestion level of the terminal; or
   an attribute of a PDU set corresponding to the second target object.

In some embodiments, the method further includes:
receiving second configuration information sent by the network device, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the method further includes:
receiving third configuration information sent by the network device, wherein the third configuration information is used for indicating whether to discard a second target object when a discard timer corresponding to the second target object expires.

In some embodiments, the method further includes:
determining, according to the third configuration information, whether to discard the second target object when the discard timer corresponding to the second target object expires.

In some embodiments, the determining, according to the third configuration information, whether to discard the second target object when the discard timer corresponding to the second target object expires includes:
in a case that the terminal is not in a congested state or the congestion level of the terminal is less than or equal to a first threshold, determining, according to the third configuration information, whether to discard the second target object when the discard timer corresponding to the second target object expires.

In some embodiments, the method further includes:
in a case that the terminal is in a congested state or the congestion level of the terminal is greater than a first threshold, determining to discard a second target object when a discard timer corresponding to the second target object expires.

An embodiment of the present disclosure provides an information transmission method, which is performed by a network device and includes:
sending first configuration information to a terminal, wherein the first configuration information includes an association between a first target object and a timing length of a discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, before sending the first configuration information to the terminal, the method further includes:
receiving first information sent by the terminal;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the method further includes:
sending second configuration information to the terminal, wherein the second configuration information is used for indicating to the terminal whether to apply the first configuration information.

In some embodiments, the method further includes:
sending third configuration information to the terminal, wherein the third configuration information is used for indicating whether to discard a second target object when a discard timer corresponding to the second target object expires.

In some embodiments, the method further includes:
receiving the third configuration information sent by a core network device.

An embodiment of the present disclosure provides a terminal, including a memory, a transceiver, and a processor;
wherein the memory is configured to store a computer program; the transceiver is configured to transmit and receive data under the control of the processor; and the processor is configured to read the computer program in the memory to perform the following steps:
receiving first configuration information sent by a network device, wherein the first configuration information includes an association between a first target object and a timing length of a discard timer;
determining, according to the first configuration information, the association between the first target object and the timing length of the discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the processor is configured to read the computer program in the memory to further perform the following step:
reporting first information to the network device;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the processor is configured to read the computer program in the memory to further perform the following step:
determining, based on the association and second information, a timing length of a discard timer corresponding to a second target object;
wherein the second target object includes at least one of the following: a packet data convergence protocol (PDCP) service data unit (SDU), or a PDU set;
the second information includes at least one of the following:
   the congestion level of the terminal; or
   an attribute of a PDU set corresponding to the second target object.

In some embodiments, the processor is configured to read the computer program in the memory to perform the following step:
receiving second configuration information sent by the network device, wherein the second configuration information is used for indicating to the terminal whether to apply the first configuration information.

In some embodiments, the processor is configured to read the computer program in the memory to further perform the following step:
receiving third configuration information sent by the network device, wherein the third configuration information is used for indicating whether to discard a second target object when a discard timer corresponding to the second target object expires.

In some embodiments, the processor is configured to read the computer program in the memory to further perform the following step:
determining, according to the third configuration information, whether to discard the second target object when the discard timer corresponding to the second target object expires.

In some embodiments, the processor is configured to read the computer program in the memory to perform the following step:
in a case that the terminal is not in a congested state or the congestion level of the terminal is less than or equal to a first threshold, determining, according to the third configuration information, whether to discard the second target object when the discard timer corresponding to the second target object expires.

In some embodiments, the processor is configured to read the computer program in the memory to further perform the following step:
in a case that the terminal is in a congested state or the congestion level of the terminal is greater than a first threshold, determining to discard a second target object when a discard timer corresponding to the second target object expires.

An embodiment of the present disclosure provides a network device, including a memory, a transceiver, and a processor;
wherein the memory is configured to store a computer program; the transceiver is configured to transmit and receive data under the control of the processor; and the processor is configured to read the computer program in the memory to perform the following step:
sending first configuration information to a terminal, wherein the first configuration information includes an association between a first target object and a timing length of a discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the processor is configured to read the computer program in the memory to further perform the following step:
receiving first information sent by the terminal;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the processor is configured to read the computer program in the memory to further perform the following step:
sending second configuration information to the terminal, wherein the second configuration information is used for indicating to the terminal whether to apply the first configuration information.

In some embodiments, the processor is configured to read the computer program in the memory to further perform the following step:
sending third configuration information to the terminal, wherein the third configuration information is used for indicating whether to discard a second target object when a discard timer corresponding to the second target object expires.

In some embodiments, the processor is configured to read the computer program in the memory to further perform the following step:
receiving the third configuration information sent by a core network device.

An embodiment of the present disclosure provides an information processing apparatus, applied to a terminal, and including:
a first receiving unit, configured to receive first configuration information sent by a network device, wherein the first configuration information includes an association between a first target object and a timing length of a discard timer;
a first determining unit, configured to determine, according to the first configuration information, the association between the first target object and the timing length of the discard timer;
wherein the first target object includes at least one of the following: a congestion level of the terminal, or an attribute of a PDU set.

An embodiment of the present disclosure provides an information transmission apparatus, which is applied to a network device and includes:
a first sending unit, configured to send first configuration information to a terminal, wherein the first configuration information includes an association between a first target object and a timing length of a discard timer;
wherein the first target object includes at least one of the following: a congestion level of the terminal, or an attribute of a PDU set.

An embodiment of the present disclosure further provides a processor-readable storage medium, wherein the processor-readable storage medium stores a computer program, and the computer program is configured to cause a processor to execute the above methods.

The present disclosure provides the following beneficial effects: the foregoing solution can alleviate congestion as much as possible while ensuring QoS by configuring the association between the terminal's congestion level and/or PDU set attribute and the timing length of the discard timer.

### BRIEF DESCRIPTION OF THE DRAWINGS

In order to more clearly illustrate the technical solutions in the embodiments of the present disclosure or related technologies, the following briefly introduces the drawings required for use in the embodiments or related technical descriptions. Obviously, the drawings described below are only some embodiments recorded in the present disclosure. For those of ordinary skill in the art, other drawings can be obtained based on these drawings without creative effort.
Fig. 1 is a schematic diagram of the relationship between XR service data frames and PDUs;
Fig. 2 is a schematic flow chart of an information processing method according to an embodiment of the present disclosure;
Fig. 3 is a schematic flow chart of an information transmission method according to an embodiment of the present disclosure;
Fig. 4 is a block diagram of an information processing apparatus according to an embodiment of the present disclosure;
Fig. 5 is a structural diagram of a terminal according to an embodiment of the present disclosure;
Fig. 6 is a block diagram of an information transmission apparatus according to an embodiment of the present disclosure;
Fig. 7 is a structural diagram of a network device according to an embodiment of the present disclosure.

### DETAILED DESCRIPTION

The following will clearly and completely describe the technical solutions in the embodiments of the present disclosure in conjunction with the accompanying drawings. Obviously, the described embodiments are only part of the embodiments of the present disclosure, not all of them. All other embodiments obtained by those of ordinary skill in the art based on the embodiments of the present disclosure without making any creative efforts shall fall within the scope of the present disclosure.

The terms "first", "second" and the like in the specification and claims of the present disclosure are used to distinguish similar objects and are not necessarily used to describe a particular order or sequential sequence. It should be understood that the terms used in this manner are interchangeable where appropriate so that the embodiments of the present disclosure described herein may be implemented in a sequence other than those illustrated or described herein. In addition, the terms "including" and "having" and any variations thereof, are intended to cover non-exclusive inclusions, e.g., a process, method, system, product, or apparatus including a series of steps or units is not necessarily limited to those steps or units explicitly listed, but may include other steps or units that are not explicitly listed or that are inherent in such processes, methods, products, or apparatus.

In the embodiments of the present disclosure, the term "and/or" describes the relationship between associated objects, indicating that three possible relationships exist. For example, A and/or B can represent three situations: A exists alone, A and B exist simultaneously, and B exists alone. The character "/" generally indicates that the associated objects are in an "or" relationship. In the embodiments of the present disclosure, the term "plurality" refers to two or more, and other quantifiers are similar.

In the embodiments of the present disclosure, words such as "exemplary" or "for example" are used for indicating examples, illustrations, or descriptions. Any embodiment or design described as "exemplary" or "for example" in the embodiments of the present disclosure should not be construed as being preferred or advantageous over other embodiments or designs. Rather, the use of words such as "exemplary" or "for example" is intended to present the relevant concepts in a concrete manner.

The related concepts mentioned in this disclosure are briefly described below.

### Introduction to the Extended Reality (XR) service

XR and cloud gaming (CG) are among the most important 5G media applications. XR is a general term for different types of reality, referring to all real-and-virtual combined environments and human-computer interactions generated by computer technology and devices. It includes augmented reality (AR), mixed reality (MR), virtual reality (VR), and the like.

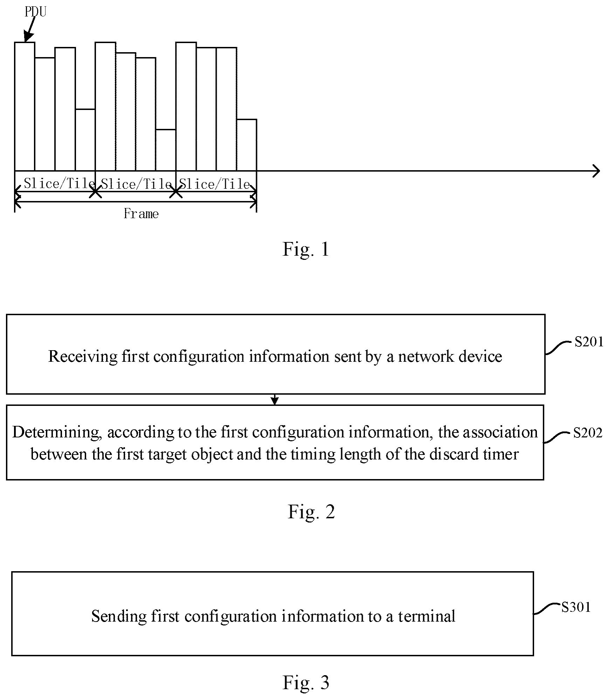

XR services are modeled based on data frames. A data frame can be divided into multiple PDUs, and the multiple PDUs may be deemed as a PDU set, as shown in Fig. 1. From the perspective of the radio access network (RAN), a PDU set is a collection of data packets sent from a higher layer to the RAN, where these data packets share the same QoS attributes.

The following describes embodiments of the present disclosure with reference to the accompanying drawings. The information processing method, information transmission method, apparatus, terminal, and network device provided by the embodiments of the present disclosure can be applied in a wireless communication system. The wireless communication system may be a system employing fifth-generation (5G) mobile communication technology (hereinafter referred to as 5G system). Those skilled in the art will appreciate that the 5G NR system is merely an example and the present disclosure is not limited thereto.

Embodiments of the present disclosure provide an information processing method, an information transmission method, an apparatus, a terminal, and a network device to alleviate congestion.

The method and the apparatus are based on the same innovative concept. Since the principles of solving problems by the method and the apparatus are similar, for the implementation of one of the apparatus and the method, reference may be made to the other of the apparatus and the method, and the repeated parts will not be described again.

As shown in Fig. 2, an embodiment of the present disclosure provides an information processing method, which is performed by a terminal and includes:
Step S201: receiving first configuration information sent by a network device, wherein the first configuration information includes an association between a first target object and a timing length of a discard timer;
Step S202: determining, according to the first configuration information, the association between the first target object and the timing length of the discard timer.

In some embodiments, the discard timer may be a packet data convergence protocol discard timer (PDCP discard timer) or a newly introduced timer; the association may be referred to as a mapping relationship or a corresponding relationship.

In some embodiments, the first target object includes at least one of the following A11 or A12.

A11. congestion level of the terminal.

In some embodiments, the congestion level is identified by N bits, and the N bits are used for indicating 2*^{N}* congestion levels; wherein N is an integer greater than or equal to 1.

For example, the congestion level is indicated by 1 bit, and includes two congestion levels: Congestion and No congestion. Alternatively, the congestion level is indicated by 3 bits, and includes 8 congestion levels.

A12. attribute of a PDU set.

In some embodiments, the attribute of the PDU set includes at least one of the following:
A121. a priority of the PDU set;
A122. an importance of the PDU set;
A123. a delay budget of the PDU set (PDU set delay budget, PSDB).

It should be noted that by reasonably setting the timing length based on the congestion level and/or the attributes of the PDU set, and using the first configuration information to configure the association between the congestion level of the terminal and/or the attributes of the PDU set and the timing length of the discard timer for the terminal, the terminal can determine the appropriate timing length based on the association, and then discard data packets based on the timing length to alleviate congestion as much as possible.

In some embodiments, the first configuration information in the embodiments of the present disclosure may be configured by the network device based on each terminal, that is, the associations obtained by different terminals may be different from each other; the first configuration information may also be configured based on each data radio bearer (DRB) of the terminal, that is, the associations determined for different DRBs of the same terminal may be different from each other.

In some embodiments, the first configuration information may be carried by radio resource control (RRC) signaling or media access control control element (MAC CE).

In some embodiments, before receiving the first configuration information sent by the network device, the method further includes:
reporting first information to the network device.

The first information includes at least one of the following B11 to B15.

B11. the terminal supports a discard function based on the first target object.

For example, the terminal supports a discard function based on a congestion level of the terminal, and/or the terminal supports a discard function based on an attribute of a PDU set.

B12. the terminal supports a discard function based on the PDU set.

B13. a congestion level supported by the terminal.

For example, the number of congestion levels supported by the terminal is reported here.

B 14. the congestion level of the terminal.

B15. indication information indicates that congestion occurs to the terminal.

For example, 1 bit is used for indicating that the terminal is congested. When the indication information is 1, it indicates that the terminal is congested. Alternatively, the indication information being 0 indicates that the terminal is congested.

In some embodiments, after obtaining the association, the method according to the embodiment of the present disclosure further includes:
determining, based on the association and second information, a timing length of a discard timer corresponding to a second target object;
wherein the second target object includes at least one of the following: a packet data convergence protocol (PDCP) service data unit (SDU), or a PDU set.

In some embodiments, the second information includes at least one of the following:
C11. the congestion level of the terminal; or
C12. an attribute of the PDU set corresponding to the second target object.

For example, when the terminal needs to discard a PDU set, if the determined association is the association between the terminal's congestion level and the timing length of the discard timer, the terminal needs to determine the timing length of the discard timer corresponding to the current congestion level based on the association and the current congestion level, and then run the discard timer based on the timing length; for example, when the terminal needs to discard a PDU set, if the determined association is the association between the terminal's congestion level and the priority of the PDU set and the timing length of the discard timer, the terminal needs to determine the timing length of the discard timer corresponding to the current congestion level and the priority of the PDU set based on the association and the current congestion level and the priority of the PDU set, and then run the discard timer based on the timing length.

In some embodiments, the method according to the embodiment of the present disclosure further includes:
receiving second configuration information sent by the network device, wherein the second configuration information is used for indicating to the terminal whether to apply the first configuration information.

That is, in this case, whether the terminal is to apply the first configuration information can be configured by the network device. Only when the network device configures the terminal to apply the first configuration information, the terminal can apply the first configuration information upon receiving the first configuration information. It should be noted that the terminal applying the first configuration can be understood as: the terminal has received the first configuration information and determines the timing length of the discard timer based on the first configuration information; the terminal not applying the first configuration can be understood as: the terminal has received the first configuration information and does not determine the timing length of the discard timer based on the first configuration information.

In some embodiments, the second configuration information may be carried by RRC signaling or an MAC CE.

In some embodiments, the second configuration information satisfies at least one of the following:
the second configuration information is configured on a per-terminal basis; or
the second configuration information is configured on a per-DRB basis.

That is to say, in the embodiment of the present disclosure, the second configuration information may be configured by the network device based on each terminal, i.e., different terminals may obtain different information on whether to apply the first configuration information; the second configuration information may also be configured based on each DRB of the terminal, i.e., the information on whether to apply the first configuration information that are determined for different DRBs of the same terminal may be different from each other.

In some embodiments, the method according to the embodiment of the present disclosure further includes:
receiving third configuration information sent by the network device, wherein the third configuration information is used for indicating whether to discard a second target object when a discard timer corresponding to the second target object expires.

That is to say, in this case, whether the terminal is to discard the second target object when the discard timer corresponding to the second target object expires is configured by the network device; further in some embodiments, after receiving the third configuration information, the method according to the embodiment of the present disclosure further includes:
determining, according to the third configuration information, whether to discard the second target object when the discard timer corresponding to the second target object expires.

It can be understood that: only when the network device configures the terminal to discard the second target object when the discard timer corresponding to the second target object expires, the terminal can discard the second target object when the discard timer corresponding to the second target object expires; if the network device configures the terminal not to discard the second target object when the discard timer corresponding to the second target object expires, then even if the discard timer corresponding to the second target object expires, the terminal will not discard the second target object.

In some embodiments, an implementation of determining, according to the third configuration information, whether to discard the second target object when the discard timer corresponding to the second target object expires includes:
in a case that the terminal is not in a congested state or the congestion level of the terminal is less than or equal to a first threshold, determining, according to the third configuration information, whether to discard the second target object when the discard timer corresponding to the second target object expires.

It should be noted that when the terminal is not in a congested state or the congestion level of the terminal is less than or equal to a first threshold, the terminal may not discard the second target object. At this time, if the discard timer is started for the second target object, then when the discard timer expires, it is still necessary to determine the specific content of the third configuration information when deciding whether to discard the second target object. If the third configuration information is used for indicating that the second target object is to be discarded when the discard timer corresponding to the second target object expires, then when the discard timer expires, the second target object is directly discarded. If the third configuration information is used for indicating that the second target object is not to be discarded when the discard timer corresponding to the second target object expires, then when the discard timer expires, the terminal does not discard the second target object.

In some embodiments, after receiving the third configuration information, the method according to the embodiment of the present disclosure further includes:
in a case that the terminal is in a congested state or the congestion level of the terminal is greater than a first threshold, determining to discard a second target object when a discard timer corresponding to the second target object expires.

It should be noted here that when the terminal is in a congested state or the congestion level of the terminal is greater than the first threshold, the terminal needs to discard the second target object. In this case, even if the third configuration information is received, the content of the third configuration information is not considered, that is, the third configuration information is ignored. As long as the discard timer expires, the terminal discards the second target object.

In some embodiments, the third configuration information may be carried via RRC signaling or an MAC CE.

Specific implementations of the embodiment of the present disclosure is described below with examples.

Application Scenario 1: The first configuration information includes an association among the congestion level, the attribute of the PDU set, and the timing length of the discard timer.

The specific implementation process includes the following steps 11 and 12.

Step 11: The terminal receives first configuration information sent by the network device.

The terminal receives the first configuration information sent by the network device, and determines the association among the congestion level, the attribute of the PDU set, and the timing length of the discard timer through the first configuration information.

The first configuration information may be carried by RRC signaling or an MAC CE. The discard timer may be a PDCP discard timer in the related art or a newly introduced timer.

It is assumed that there are only two congestion levels (No congestion and Congestion, represented by 0 and 1, respectively). Importance of the PDU set is taken as an example of the attribute of the PDU set. It is assumed that the importance of the PDU set has 16 levels, and there are three timing lengths of the discard timer. The possible content of the first configuration information is shown in Table 1:

**Table 1 Association among congestion level, attribute of PDU set, and timing length of discard timer**

| Congestion level | Attribute of PDU set | Timing length of PDCP discard timer |
|---|---|---|
| 0 | 1~16 | 100ms |
| 1 | 1~8 | 100ms |
| | 9~16 | 0ms |

Step 12: The terminal discards the PDCP SDU based on the first configuration information.

After receiving the first configuration information, the terminal determines the timing length of the PDCP discard timer corresponding to the PDU set according to the current congestion level and the attribute of the PDU set.

For example, if the current congestion level is 1 and the attribute of the PDU set is 15, it is determined that the timing length of the PDCP discard timer is 0, that is, the data packet corresponding to the PDU set is directly discarded upon arriving at the PDCP layer.

Application Scenario 2: The first configuration information only contains an association between the congestion level and the timing length of the discard timer.

The specific implementation process includes the following steps 21 and 22.

Step 21: The terminal receives first configuration information sent by the network device.

The terminal receives first configuration information sent by the network device, and determines the association between the congestion level and the timing length of the discard timer through the first configuration information.

The first configuration information may be carried by RRC signaling or an MAC CE. The discard timer may be a PDCP discard timer in the related art or a newly introduced timer.

It is assumed that there are only two congestion levels (No congestion and Congestion, represented by 0 and 1, respectively) and there are three timing lengths of the discard timer. The possible content of the first configuration information is shown in Table 2:

**Table 2 Association between congestion level and timing length of discard timer**

| Congestion level | Timing length of PDCP discard timer |
|---|---|
| 0 | 100ms |
| 1 | 0ms |

Step 22: The terminal discards the PDCP SDU based on the first configuration information.

After the terminal receives the first configuration information, the terminal determines the timing length of the PDCP discard timer corresponding to the PDU set according to the current congestion level.

For example, if the current congestion level is 1, it is determined that the timing length of the discard timer is 0, that is, the data packet corresponding to the PDU set is directly discarded when it arrives at the PDCP layer.

Application scenario 3: The terminal receives the first configuration information sent by the network device, and whether to apply the first configuration information is determined based on second configuration information.

The specific implementation process includes the following steps 31 to 33.

Step 31: The terminal receives first configuration information sent by the network device.

The terminal receives the first configuration information sent by the network device, and determines the association among the congestion level, the attribute of the PDU set, and the timing length of the discard timer through the first configuration information.

The first configuration information may be carried by RRC signaling or an MAC CE. The discard timer may be a PDCP discard timer in the related art or a newly introduced timer.

It is assumed that there are only two congestion levels (No congestion and Congestion, represented by 0 and 1, respectively). Importance of the PDU set is taken as an example of the attribute of the PDU set. It is assumed that the importance of the PDU set has 16 levels, and there are three timing lengths of the discard timer. The possible content of the first configuration information is as shown in Table 1.

Step 32: The terminal receives the second configuration information.

When congestion occurs to a terminal, the terminal reports its current congestion status to the network device. The specific reporting method can be one of the following: the terminal reports the current congestion level of the terminal to the network device, and the terminal reports to the network device that congestion occurs to the terminal.

After receiving the report from the terminal, the network device determines whether to send second configuration information to the terminal. The second configuration information is used for indicating to the terminal whether to apply the first configuration information. The second configuration information can be transmitted using RRC signaling or an MAC CE.

Step 33: The terminal discards the PDCP SDU based on the first configuration information.

For example, after receiving the second configuration information, the terminal determines to apply the first configuration information received in step 31. The terminal determines the timing length of the discard timer corresponding to the PDU set according to the current congestion level and the attribute of the PDU set.

For example, if the current congestion level is 1 and the attribute of the PDU set (PDU set importance) is 15, it is determined that the timing length of the PDCP discard timer is 0, that is, the data packet corresponding to the PDU set is directly discarded upon arriving at the PDCP layer.

Application Scenario 4: The terminal receives the first configuration information sent by the network device and performs packet discarding in conjunction with third configuration information.

The specific implementation process includes the following steps 41 to 43.

Step 41: The terminal receives first configuration information sent by the network device.

The terminal receives first configuration information sent by the network device and determines the association among the congestion level, the attribute of the PDU set, and the timing length of the discard timer based on the first configuration information. The discard timer can be a PDCP discard timer in the related art or a newly introduced timer.

The first configuration information may be carried by RRC signaling or an MAC CE.

It is assumed that there are only two congestion levels (No congestion and Congestion, represented by 0 and 1, respectively). Importance of the PDU set is taken as an example of the attribute of the PDU set. It is assumed that the importance of the PDU set has 16 levels, and there are three timing lengths of the discard timer. The possible content of the first configuration information is as shown in Table 1.

Step 42: The terminal receives second configuration information.

It should be noted that step 42 is an optional step and may not be performed.

When congestion occurs to a terminal, the terminal reports its current congestion status to the network device. The specific reporting method can be one of the following: the terminal reports the current congestion level of the terminal to the network device, and the terminal reports to the network device that congestion occurs to the terminal.

After receiving the report from the terminal, the network device determines whether to send second configuration information to the terminal. The second configuration information is used for indicating to the terminal whether to apply the first configuration information. The second configuration information can be transmitted using RRC signaling or an MAC CE.

Step 43: The terminal discards the PDCP SDU based on the first configuration information.

If step 42 is performed, after receiving the second configuration information, the terminal determines to apply the first configuration information received in step 41. If step 42 is not performed, step 43 may be performed.

In some embodiments, the terminal may also receive third configuration information from a network device, wherein the third configuration information is used for indicating whether a PDCP SDU or PDU set is to be discarded when a discard timer corresponding to the PDCP SDU or PDU set expires. Further, the network device needs to obtain the third configuration information from the core network. The third configuration information may be carried by RRC signaling or an MAC CE.

Specifically, packet discard management may be performed based on the third configuration information and the first configuration information in one of the following ways.

In a case that the terminal is not in a congested state or the congestion level of the terminal is less than or equal to a first threshold, determining, according to the third configuration information, whether to discard the PDCP SDU or PDU set when the discard timer corresponding to the PDCP SDU or PDU set expires; for example, if the third configuration information indicates that the PDCP SDU or PDU set needs to be discarded when the discard timer corresponding to the PDCP SDU or PDU set expires, then the discarding operation is performed when the discard timer expires; otherwise, the discarding operation is not performed.

In a case that the terminal is in a congested state or the congestion level of the terminal is greater than a first threshold, the third configuration information is ignored, and a discarding operation is performed when a discard timer corresponding to the PDCP SDU or PDU set expires.

In summary, at least one embodiment of the present disclosure provides a congestion-related packet discard management method, through which congestion can be alleviated as much as possible while ensuring QoS.

The technical solution provided by the embodiments of the present disclosure can be applied to a variety of systems, especially 5G systems. For example, applicable systems may include the global system of mobile communication (GSM) system, the code division multiple access (CDMA) system, the wideband code division multiple access (WCDMA), the general packet radio service (GPRS) system, the long-term evolution (LTE) system, the LTE frequency division duplex (FDD) system, the LTE time division duplex (TDD) system, the long term evolution advanced (LTE-A) system, the universal mobile telecommunication system (UMTS), the world-wide interoperability for microwave access (WiMAX) system, and the 5G New Radio (NR) system. These various systems all include a terminal (also referred to as terminal device) and a network device. The system may also include a core network part, such as the Evolved Packet System (EPS) and the 5G System (5GS).

The terminal described with respect to the embodiments of the present disclosure, also referred to as terminal device, can be a device that provides voice and/or data connectivity to users, a handheld device with wireless connectivity, other processing device connected to a wireless modem, or the like. The names of terminal devices may vary in different systems. For example, in 5G systems, the terminal device may be referred to as user equipment (UE). A wireless terminal device can communicate with one or more core networks (CNs) via a radio access network (RAN). The wireless terminal device can be a mobile terminal device, such as mobile phone (also known as "cellular" phone), and computer with mobile terminal device, for example, portable, pocket-sized, handheld, built-in, or in-vehicle mobile device that exchanges voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device described with respect to the embodiments of the present disclosure may be a base station, which may include multiple cells providing services to terminals. Depending on the specific application scenario, a base station may also be referred to as an access point, or may be a device in an access network that communicates with a wireless terminal device via one or more sectors over the air interface, or may be referred to by other names. The network device may be used to convert received air frames into Internet Protocol (IP) packets, or vice versa, acting as a router between the wireless terminal device and the rest of the access network, which may include an Internet Protocol (IP) communication network. The network device may also coordinate attribute management of the air interface. For example, the network device involved in the embodiments of the present disclosure may be a base transceiver station (BTS) in the Global System for Mobile communications (GSM) or Code Division Multiple Access (CDMA), NodeB in Wide-band Code Division Multiple Access (WCDMA), evolutionary NodeB (eNB or e-NodeB) in the Long Term Evolution (LTE) system, 5G base station (gNB) in the next generation 5G network architecture, home evolved NodeB (HeNB), relay node, femto, pico, etc., and are not limited in the embodiments of the present disclosure. In some network structures, the network devices may include a centralized unit (CU) node and a distributed unit (DU) node, and the centralized unit and the distributed unit may also be geographically separated.

The Network device and terminal device can each use one or more antennas for Multiple Input Multiple Output (MIMO) transmission therebetween. MIMO transmission can be either Single User MIMO (SU-MIMO) or Multiple User MIMO (MU-MIMO). Depending on the configuration and number of antennas, MIMO transmission can be two-dimensional MIMO (2D-MIMO), three-dimensional MIMO (3D-MIMO), full-dimensional MIMO (FD-MIMO), or massive MIMO. It can also employ diversity transmission, precoded transmission, beamformed transmission or the like.

As shown in Fig. 3, an embodiment of the present disclosure provides an information transmission method, which is performed by a network device and includes:
Step S301: sending first configuration information to a terminal, wherein the first configuration information includes an association between a first target object and a timing length of a discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, before sending the first configuration information to the terminal, the method further includes:
receiving first information sent by the terminal;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the method further includes:
sending second configuration information to the terminal, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the method further includes:
sending third configuration information to the terminal, wherein the third configuration information is used for indicating whether to discard a second target object when a discard timer corresponding to the second target object expires.

In some embodiments, the method further includes:
receiving the third configuration information sent by a core network device.

It should be noted that all implementations in the above embodiments are applicable to the embodiments of the information processing method applied to the network device side, and can achieve the same technical effects, thus a repeated description is omitted here.

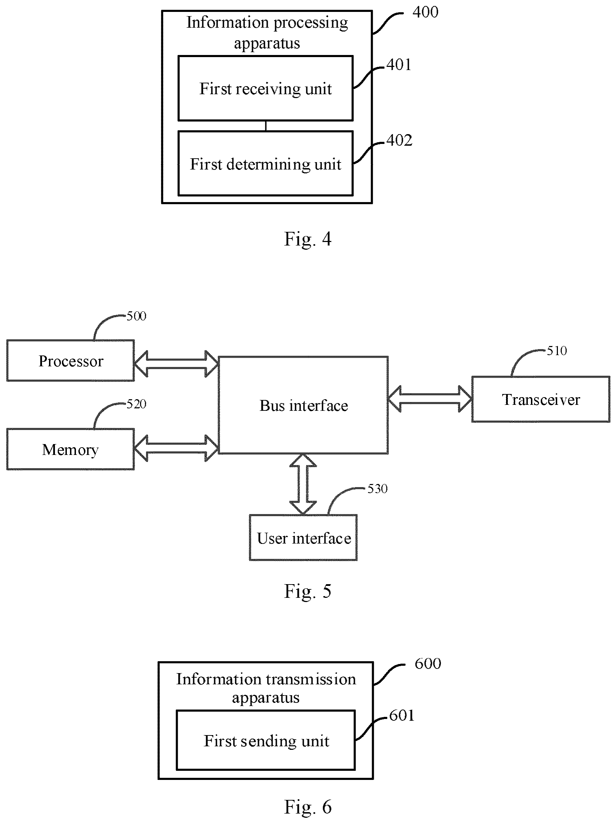

As shown in Fig. 4, an embodiment of the present disclosure provides an information processing apparatus 400, which is applied to a terminal and includes:
a first receiving unit 401, configured to receive first configuration information sent by a network device, wherein the first configuration information includes an association between a first target object and a timing length of a discard timer;
a first determining unit 402, configured to determine, according to the first configuration information, an association between the first target object and the timing length of the discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the apparatus further includes:
a reporting unit, configured to report the first information to the network device before the first receiving unit 401 receives the first configuration information sent by the network device;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the apparatus further includes:
a second determining unit, configured to determine a timing length of a discard timer corresponding to a second target object according to the association and second information;
wherein the second target object includes at least one of the following: a packet data convergence protocol (PDCP) service data unit (SDU), or a PDU set;
the second information includes at least one of the following:
   the congestion level of the terminal; or
   an attribute of a PDU set corresponding to the second target object.

In some embodiments, the apparatus further includes:
a second receiving unit, configured to receive second configuration information sent by a network device, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the apparatus further includes:
a third receiving unit, configured to receive third configuration information sent by the network device, wherein the third configuration information is used for indicating whether to discard a second target object when a discard timer corresponding to the second target object expires.

In some embodiments, the apparatus further includes:
a third determining unit, configured to determine, according to the third configuration information, whether to discard the second target object when the discard timer corresponding to the second target object expires.

In some embodiments, the third determining unit is configured to:
in a case that the terminal is not in a congested state or the congestion level of the terminal is less than or equal to a first threshold, determine, according to the third configuration information, whether to discard the second target object when the discard timer corresponding to the second target object expires.

In some embodiments, the apparatus further includes:
a fourth determining unit, configured to, in a case that the terminal is in a congested state or the congestion level of the terminal is greater than a first threshold, determine to discard a second target object when a discard timer corresponding to the second target object expires.

It should be noted that the apparatus embodiment is an apparatus that corresponds to the above-mentioned method embodiment in a one-to-one relationship. All implementations in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

As shown in Fig. 5, an embodiment of the present disclosure further provides a terminal, including a processor 500, a transceiver 510, a memory 520, and a program stored in the memory 520 and executable on the processor 500. The transceiver 510 is connected to the processor 500 and the memory 520 via a bus interface. The processor 500 is configured to read the program in the memory and execute the following steps:
receiving, through the transceiver, first configuration information sent by a network device, wherein the first configuration information includes an association between a first target object and a timing length of a discard timer;
determining, according to the first configuration information, the association between the first target object and the timing length of the discard timer;
wherein the first target object includes at least one of the following: a congestion level of the terminal, or an attribute of a PDU set.

The transceiver 510 is configured to receive and send data under the control of the processor 500.

In Fig. 5, the bus architecture may include any number of interconnected buses and bridges, to connect various circuits such as one or more processors specifically represented by processor 500 and a memory represented by memory 520. The bus architecture can also link various other circuits such as peripherals, regulators, and power management circuits together, which are all well known in the art and are therefore not further described herein. The bus interface provides an interface. The transceiver 510 can be a plurality of components, namely, a transmitter and a receiver, providing a unit for communicating with various other devices on a transmission medium. The transmission medium includes a wireless channel, a wired channel, an optic fiber, or the like. For different user equipment, the user interface 530 can also be an interface that can connect required devices externally or internally, and the connected devices include, but are not limited to: keypads, displays, speakers, microphones, joysticks, etc.

The processor 500 is responsible for managing the bus architecture and general processing, and the memory 520 can store data used by the processor 500 when performing operations.

In some embodiments, the processor 500 may be a central processing unit (CPU), an application specific integrated circuit (ASIC), a field programmable gate array (FPGA), or a complex programmable logic device (CPLD). The processor may also adopt a multi-core architecture.

The processor is configured to implement any of the methods provided by the embodiments of the present disclosure according to the obtained executable instructions by calling the computer program stored in the memory. The processor and the memory can also be arranged physically separately.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the processor is configured to read the computer program in the memory to further perform the following step:
reporting first information to the network device;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the processor is configured to read the computer program in the memory to further perform the following step:
determining, based on the association and second information, a timing length of a discard timer corresponding to a second target object;
wherein the second target object includes at least one of the following: a packet data convergence protocol (PDCP) service data unit (SDU) or a PDU set;
the second information includes at least one of the following:
   the congestion level of the terminal; or
   an attribute of a PDU set corresponding to the second target object.

In some embodiments, the processor is configured to read the computer program in the memory to perform the following step:
receiving second configuration information sent by the network device, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the processor is configured to read the computer program in the memory to further perform the following step:
receiving third configuration information sent by the network device, wherein the third configuration information is used for indicating whether to discard a second target object when a discard timer corresponding to the second target object expires.

In some embodiments, the processor is configured to read the computer program in the memory to further perform the following step:
determining, according to the third configuration information, whether to discard the second target object when the discard timer corresponding to the second target object expires.

In some embodiments, the processor is configured to read the computer program in the memory to perform the following step:
in a case that the terminal is not in a congested state or the congestion level of the terminal is less than or equal to a first threshold, determining, according to the third configuration information, whether to discard the second target object when the discard timer corresponding to the second target object expires.

In some embodiments, the processor is configured to read the computer program in the memory to further perform the following step:
in a case that the terminal is in a congested state or the congestion level of the terminal is greater than a first threshold, determining to discard a second target object when a discard timer corresponding to the second target object expires.

It should be noted here that the above-mentioned terminal provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

An embodiment of the present disclosure further provides a computer-readable storage medium having a computer program stored thereon, wherein when the computer program is executed by a processor, the steps of the information processing method applied to a terminal are implemented. The processor-readable storage medium can be any available medium or data storage device that can be accessed by the processor, including but not limited to magnetic storage (such as floppy disk, hard disk, magnetic tape, magneto-optical disk (MO)), optical storage (such as compact disc (CD), digital video disc (DVD), Blu-ray disc (BD), high-definition versatile disc (HVD)), and semiconductor storage (such as read-only memory (ROM), erasable programmable read-only memory (EPROM), electrically erasable programmable read-only memory (EEPROM), non-volatile memory (NAND FLASH), solid-state disk (solid state drive, SSD)).

As shown in Fig. 6, an embodiment of the present disclosure provides an information transmission apparatus 600, which is applied to a network device and includes:
a first sending unit 601, configured to send first configuration information to a terminal, wherein the first configuration information includes an association between a first target object and a timing length of a discard timer;
wherein the first target object includes at least one of the following: a congestion level of the terminal, or an attribute of a PDU set.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the apparatus further includes:
a fourth receiving unit, configured to receive first information sent by the terminal before the first sending unit 601 sends the first configuration information to the terminal;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the apparatus further includes:
a second sending unit, configured to send second configuration information to the terminal, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the apparatus further includes:
a third sending unit, configured to send third configuration information to the terminal, wherein the third configuration information is used for indicating whether to discard a second target object when a discard timer corresponding to the second target object expires.

In some embodiments, the apparatus further includes:
a fifth receiving unit, configured to receive the third configuration information sent by a core network device.

It should be noted that the apparatus embodiment is an apparatus that corresponds to the above-mentioned method embodiment in a one-to-one relationship. All implementation methods in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

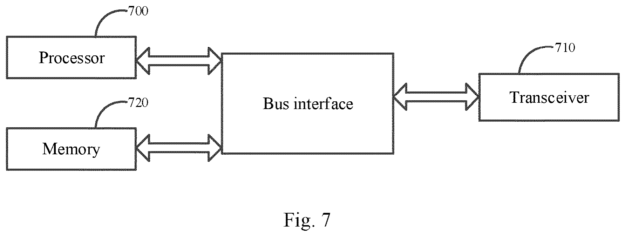

As shown in Fig. 7, an embodiment of the present disclosure further provides a network device, including a processor 700, a transceiver 710, a memory 720, and a program stored in the memory 720 and executable on the processor 700. The transceiver 710 is connected to the processor 700 and the memory 720 via a bus interface. The processor 700 is configured to read the program in the memory to perform the following step:
sending first configuration information to a terminal through the transceiver, wherein the first configuration information includes an association between the first target object and the timing length of the discard timer;
wherein the first target object includes at least one of the following: a congestion level of the terminal, or an attribute of a PDU set.

The transceiver 710 is configured to receive and send data under the control of the processor 700.

In Fig. 7, the bus architecture may include any number of interconnected buses and bridges, to connect various circuits such as one or more processors specifically represented by processor 700 and a memory represented by memory 720. The bus architecture can also link various other circuits such as peripherals, regulators, and power management circuits together, which are all well known in the art and are therefore not further described herein. The bus interface provides an interface. The transceiver 710 can be a plurality of components, namely, a transmitter and a receiver, providing a unit for communicating with various other devices on a transmission medium. The transmission medium includes a wireless channel, a wired channel, an optic fiber, or the like.

The processor 700 is responsible for managing the bus architecture and general processing, and the memory 720 can store data used by the processor 700 when performing operations.

In some embodiments, the processor 700 may be a CPU, an ASIC, an FPGA, or a CPLD, and the processor may also adopt a multi-core architecture.

The processor is configured to implement any of the methods provided by the embodiments of the present disclosure according to the obtained executable instructions by calling the computer program stored in the memory. The processor and the memory can also be arranged physically separately.

In some embodiments, the attribute of the PDU set includes at least one of the following:
a priority of the PDU set;
an importance of the PDU set; or
a delay budget of the PDU set.

In some embodiments, the congestion level is identified by N bits, and the N bits are used for indicating 2*^{N}* congestion levels;
wherein N is an integer greater than or equal to 1.

In some embodiments, the processor is configured to read the computer program in the memory to further perform the following step:
receiving first information sent by the terminal;
wherein the first information includes at least one of the following:
   the terminal supports a discard function based on the first target object;
   the terminal supports a discard function based on the PDU set;
   a congestion level supported by the terminal;
   the congestion level of the terminal; or
   indication information indicates that congestion occurs to the terminal.

In some embodiments, the processor is configured to read the computer program in the memory to further perform the following step:
sending second configuration information to the terminal, wherein the second configuration information is used for indicating to the terminal whether to apply the first configuration information.

In some embodiments, the second configuration information satisfies at least one of the following:
the second configuration information is configured per terminal; or
the second configuration information is configured per data radio bearer (DRB).

In some embodiments, the processor is configured to read the computer program in the memory to further perform the following step:
sending third configuration information to the terminal, wherein the third configuration information is used for indicating whether to discard a second target object when a discard timer corresponding to the second target object expires.

In some embodiments, the processor is configured to read the computer program in the memory to further perform the following step:
receiving the third configuration information sent by a core network device.

It should be noted here that the above-mentioned network device provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure further provides a computer-readable storage medium having a computer program stored thereon, wherein when the computer program is executed by a processor, the steps of the information transmission method applied to a network device are implemented. The processor-readable storage medium can be any available medium or data storage device that the processor can access, including but not limited to magnetic storage (such as floppy disk, hard disk, magnetic tape, magneto-optical disk (MO)), optical storage (such as CD, DVD, BD, HVs), and semiconductor storage (such as ROM, EPROM, EEPROM, non-volatile memory (NAND FLASH), solid-state drive (SSD)).

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, the determining module can be a separately established processing element, or it can be integrated into a chip of the above-mentioned device. In addition, it can also be stored in the memory of the above-mentioned device in the form of program code, and called by a processing element of the above-mentioned device to perform the functions of the above-mentioned determining module. The implementation of other modules is similar. In addition, these modules can all or partly be integrated together, or they can be implemented independently. The processing element described here can be an integrated circuit with signal processing capabilities. In the implementation process, each step of the above method or each of the above modules can be accomplished by the hardware integrated logic circuit in the processor element or by instructions in the form of software.

For example, each module, unit, sub-unit, or sub-module may be one or more integrated circuits configured to implement the above method, such as one or more application-specific integrated circuits (ASICs), one or more digital signal processors (DSPs), or one or more field programmable gate arrays (FPGAs). For another example, when a module is implemented by a processing element scheduling program code, the processing element may be a general-purpose processor, such as a central processing unit (CPU) or other processor capable of calling program code. For another example, these modules may be integrated together and implemented in the form of a system-on-a-chip (SOC).

The terms "first", "second" and the like in the specification and claims of the present disclosure are used to distinguish similar objects and are not necessarily used to describe a specific order or precedence. It should be understood that the terms used in this manner are interchangeable where appropriate, so that the embodiments of the present disclosure described herein may be implemented in a sequence other than that illustrated or described herein. In addition, the terms "including" and "having" and any variations thereof, are intended to cover non- exclusive inclusions. For example, a process, method, system, product, or device that includes a series of steps or units need not be limited to those steps or units explicitly listed, but may include other steps or units that are not explicitly listed or that are inherent in these processes, methods, products, or devices. In addition, the use of "and/or" in the specification and claims to indicate at least one of the connected objects, for example, A and/or B and/or C, means that seven situations are included: A alone, B alone, C alone, both A and B present, both B and C present, both A and C present, and all A, B, and C present. Similarly, the use of "at least one of A or B" in the specification and claims should be understood to mean "A alone, B alone, or both A and B present."

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. An information processing method, performed by a terminal, and comprising:
receiving first configuration information sent by a network device, wherein the first configuration information comprises an association between a first target object and a timing length of a discard timer; and
determining, according to the first configuration information, the association between the first target object and the timing length of the discard timer;
wherein the first target object comprises at least one of the following: a congestion level of the terminal, or an attribute of a protocol data unit (PDU) set.

2. The method according to claim 1, wherein the attribute of the PDU set comprises at least one of the following:
a priority of the PDU set;
an importance of the PDU set; or
a delay budget of the PDU set.

3. The method according to claim 1, wherein the congestion level is identified by N bits, and the N bits are used for indicating 2^N congestion levels;
wherein N is an integer greater than or equal to 1.

4. The method according to any one of claims 1 to 3, further comprising:
reporting first information to the network device;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

5. The method according to any one of claims 1 to 4, further comprising:
determining, based on the association and second information, a timing length of a discard timer corresponding to a second target object;
wherein the second target object comprises at least one of the following: a packet data convergence protocol (PDCP) service data unit (SDU), or a PDU set;
the second information comprises at least one of the following:
the congestion level of the terminal; or
an attribute of a PDU set corresponding to the second target object.

6. The method according to any one of claims 1 to 4, further comprising:
receiving second configuration information sent by the network device, wherein the second configuration information is used for indicating to the terminal whether to apply the first configuration information.

7. The method according to claim 6, wherein the second configuration information satisfies at least one of the following:
the second configuration information is configured per terminal; or
the second configuration information is configured per data radio bearer (DRB).

8. The method according to any one of claims 1 to 6, further comprising:
receiving third configuration information sent by the network device, wherein the third configuration information is used for indicating whether to discard a second target object when a discard timer corresponding to the second target object expires.

9. The method according to claim 8, further comprising:
determining, according to the third configuration information, whether to discard the second target object when the discard timer corresponding to the second target object expires.

10. The method according to claim 9, wherein the determining, according to the third configuration information, whether to discard the second target object when the discard timer corresponding to the second target object expires comprises:
in a case that the terminal is not in a congested state or the congestion level of the terminal is less than or equal to a first threshold, determining, according to the third configuration information, whether to discard the second target object when the discard timer corresponding to the second target object expires.

11. The method according to any one of claims 1 to 9, further comprising:
in a case that the terminal is in a congested state or the congestion level of the terminal is greater than a first threshold, determining to discard a second target object when a discard timer corresponding to the second target object expires.

12. An information transmission method, performed by a network device, and comprising:
sending first configuration information to a terminal, wherein the first configuration information comprises an association between a first target object and a timing length of a discard timer;
wherein the first target object comprises at least one of the following: a congestion level of the terminal, or an attribute of a PDU set.

13. The method according to claim 12, wherein the attribute of the PDU set comprises at least one of the following:
a priority of the PDU set;
an importance of the PDU set; or
a delay budget of the PDU set.

14. The method according to claim 12, wherein the congestion level is identified by N bits, and the N bits are used for indicating 2^N congestion levels;
wherein N is an integer greater than or equal to 1.

15. The method according to any one of claims 12 to 14, further comprising:
receiving first information sent by the terminal;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

16. The method according to any one of claims 12 to 15, further comprising:
sending second configuration information to the terminal, wherein the second configuration information is used for indicating to the terminal whether to apply the first configuration information.

17. The method according to any one of claims 12 to 16, further comprising:
sending third configuration information to the terminal, wherein the third configuration information is used for indicating whether to discard a second target object when a discard timer corresponding to the second target object expires.

18. The method according to claim 17, further comprising:
receiving the third configuration information sent by a core network device.

19. A terminal comprising a memory, a transceiver, and a processor;
wherein the memory is configured to store a computer program; the transceiver is configured to transmit and receive data under the control of the processor; and the processor is configured to read the computer program in the memory to perform the following steps:
receiving first configuration information sent by a network device, wherein the first configuration information comprises an association between a first target object and a timing length of a discard timer;
determining, according to the first configuration information, the association between the first target object and the timing length of the discard timer;
wherein the first target object comprises at least one of the following: a congestion level of the terminal, or an attribute of a PDU set.

20. The terminal according to claim 19, wherein the attribute of the PDU set comprises at least one of the following:
a priority of the PDU set;
an importance of the PDU set; or
a delay budget of the PDU set.

21. The terminal according to claim 19, wherein the congestion level is identified by N bits, and the N bits are used for indicating 2^N congestion levels;
wherein N is an integer greater than or equal to 1.

22. The terminal according to any one of claims 19 to 21, wherein the processor is configured to read the computer program in the memory to further perform the following step:
reporting first information to the network device;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

23. The terminal according to any one of claims 19 to 22, wherein the processor is configured to read the computer program in the memory to further perform the following step:
determining, based on the association and second information, a timing length of a discard timer corresponding to a second target object;
wherein the second target object comprises at least one of the following: a packet data convergence protocol (PDCP) service data unit (SDU), or a PDU set;
the second information comprises at least one of the following:
the congestion level of the terminal; or
an attribute of a PDU set corresponding to the second target object.

24. The terminal according to any one of claims 19 to 22, wherein the processor is configured to read the computer program in the memory to perform the following step:
receiving second configuration information sent by the network device, wherein the second configuration information is used for indicating to the terminal whether to apply the first configuration information.

25. The terminal according to any one of claims 19 to 24, wherein the processor is configured to read the computer program in the memory to further perform the following step:
receiving third configuration information sent by the network device, wherein the third configuration information is used for indicating whether to discard a second target object when a discard timer corresponding to the second target object expires.

26. The terminal according to claim 25, wherein the processor is configured to read the computer program in the memory to further perform the following step:
determining, according to the third configuration information, whether to discard the second target object when the discard timer corresponding to the second target object expires.

27. The terminal according to claim 26, wherein the processor is configured to read the computer program in the memory to perform the following step:
in a case that the terminal is not in a congested state or the congestion level of the terminal is less than or equal to a first threshold, determining, according to the third configuration information, whether to discard the second target object when the discard timer corresponding to the second target object expires.

28. The terminal according to any one of claims 19 to 27, wherein the processor is configured to read the computer program in the memory to further perform the following step:
in a case that the terminal is in a congested state or the congestion level of the terminal is greater than a first threshold, determining to discard a second target object when a discard timer corresponding to the second target object expires.

29. A network device comprising a memory, a transceiver, and a processor;
wherein the memory is configured to store a computer program; the transceiver is configured to transmit and receive data under the control of the processor; and the processor is configured to read the computer program in the memory to perform the following step:
sending first configuration information to a terminal, wherein the first configuration information comprises an association between a first target object and a timing length of a discard timer;
wherein the first target object comprises at least one of the following: a congestion level of the terminal, or an attribute of a PDU set.

30. The network device according to claim 29, wherein the attribute of the PDU set comprises at least one of the following:
a priority of the PDU set;
an importance of the PDU set; or
a delay budget of the PDU set.

31. The network device according to claim 29, wherein the congestion level is identified by N bits, and the N bits are used for indicating 2^N congestion levels;
wherein N is an integer greater than or equal to 1.

32. The network device according to any one of claims 29 to 31, wherein the processor is configured to read the computer program in the memory to further perform the following step:
receiving first information sent by the terminal;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

33. The network device according to any one of claims 29 to 32, wherein the processor is configured to read the computer program in the memory to further perform the following step:
sending second configuration information to the terminal, wherein the second configuration information is used for indicating to the terminal whether to apply the first configuration information.

34. The network device according to any one of claims 29 to 33, wherein the processor is configured to read the computer program in the memory to further perform the following step:
sending third configuration information to the terminal, wherein the third configuration information is used for indicating whether to discard a second target object when a discard timer corresponding to the second target object expires.

35. The network device according to claim 34, wherein the processor is configured to read the computer program in the memory to further perform the following step:
receiving the third configuration information sent by a core network device.

36. An information processing apparatus, applied to a terminal, and comprising:
a first receiving unit, configured to receive first configuration information sent by a network device, wherein the first configuration information comprises an association between a first target object and a timing length of a discard timer;
a first determining unit, configured to determine, according to the first configuration information, the association between the first target object and the timing length of the discard timer;
wherein the first target object comprises at least one of the following: a congestion level of the terminal, or an attribute of a PDU set.

37. The apparatus according to claim 36, wherein the attribute of the PDU set comprises at least one of the following:
a priority of the PDU set;
an importance of the PDU set; or
a delay budget of the PDU set.

38. The apparatus according to claim 36, wherein the congestion level is identified by N bits, and the N bits are used for indicating 2^N congestion levels;
wherein N is an integer greater than or equal to 1.

39. The apparatus according to any one of claims 36 to 38, further comprising:
a reporting unit, configured to report first information to the network device before the first receiving unit receives the first configuration information sent by the network device;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

40. The apparatus according to any one of claims 36 to 39, further comprising:
a second determining unit, configured to determine, based on the association and second information, a timing length of a discard timer corresponding to a second target object;
wherein the second target object comprises at least one of the following: a packet data convergence protocol (PDCP) service data unit (SDU), or a PDU set;
the second information comprises at least one of the following:
the congestion level of the terminal; or
an attribute of a PDU set corresponding to the second target object.

41. The apparatus according to any one of claims 36 to 39, further comprising:
a second receiving unit, configured to receive second configuration information sent by the network device, wherein the second configuration information is used for indicating to the terminal whether to apply the first configuration information.

42. The apparatus according to any one of claims 36 to 41, further comprising:
a third receiving unit, configured to receive third configuration information sent by the network device, wherein the third configuration information is used for indicating whether to discard a second target object when a discard timer corresponding to the second target object expires.

43. The apparatus according to claim 42, further comprising:
a third determining unit, configured to determine, according to the third configuration information, whether to discard the second target object when the discard timer corresponding to the second target object expires.

44. The apparatus according to claim 43, wherein the third determining unit is configured to:
in a case that the terminal is not in a congested state or the congestion level of the terminal is less than or equal to a first threshold, determine, according to the third configuration information, whether to discard the second target object when the discard timer corresponding to the second target object expires.

45. The apparatus according to any one of claims 36 to 44, further comprising:
a fourth determining unit, configured to, in a case that the terminal is in a congested state or the congestion level of the terminal is greater than a first threshold, determine to discard a second target object when a discard timer corresponding to the second target object expires.

46. An information transmission apparatus, applied to a network device, and comprising:
a first sending unit, configured to send first configuration information to a terminal, wherein the first configuration information comprises an association between a first target object and a timing length of a discard timer;
wherein the first target object comprises at least one of the following: a congestion level of the terminal, or an attribute of a PDU set.

47. The apparatus according to claim 46, wherein the attribute of the PDU set comprises at least one of the following:
a priority of the PDU set;
an importance of the PDU set; or
a delay budget of the PDU set.

48. The apparatus according to claim 46, wherein the congestion level is identified by N bits, and the N bits are used for indicating 2^N congestion levels;
wherein N is an integer greater than or equal to 1.

49. The apparatus according to any one of claims 46 to 48, further comprising:
a fourth receiving unit, configured to receive first information sent by the terminal before the first sending unit sends the first configuration information to the terminal;
wherein the first information comprises at least one of the following:
the terminal supports a discard function based on the first target object;
the terminal supports a discard function based on the PDU set;
a congestion level supported by the terminal;
the congestion level of the terminal; or
indication information indicates that congestion occurs to the terminal.

50. The apparatus according to any one of claims 46 to 49, further comprising:
a second sending unit, configured to send second configuration information to the terminal, wherein the second configuration information is used for indicating to the terminal whether to apply the first configuration information.

51. The apparatus according to any one of claims 46 to 50, further comprising:
a third sending unit, configured to send third configuration information to the terminal, wherein the third configuration information is used for indicating whether to discard a second target object when a discard timer corresponding to the second target object expires.

52. The apparatus according to claim 51, further comprising:
a fifth receiving unit, configured to receive the third configuration information sent by a core network device.

53. A processor-readable storage medium storing a computer program, wherein the computer program is configured to cause the processor to execute the method according to any one of claims 1 to 18.
